# EUROPEAN PATENT SPECIFICATION

(11) **EP 2 492 388 B1**
(45) Date of publication and mention of the grant of the patent: **29.10.2014**
(21) Application number: 12001240.6
(22) Date of filing: 24.02.2012
(51) Int. Cl.: D06F 58/18, D06F 58/04, D06F 58/28

(54) **A method for drying laundry**
Verfahren zum Wäschetrocknen
Procédé pour sécher le linge

(30) Priority: 24.02.2011 IT RN20110010
(43) Date of publication of application: 29.08.2012
(73) Proprietor: Indesit Company S.p.A., 60044 Fabriano (AN) (IT)
(72) Inventor: Latini, Giuliana, 60044 Fraz. Marischio Fabriano (Ancona) (IT); Marchesi, Nicola, 60044 Fabriano (Ancona) (IT); Mancini, Mauro, 60044 Fraz. Marischio Fabriano (Ancona) (IT)
(74) Representative: Monelli, Alberto

(56) References cited:
- US-A1- 2001 023 321
- US-A1- 2007 068 036
- US-A1- 2009 165 331

## Description

This invention relates to method for drying laundry using a drying machine. Drying machines are known comprising a line for moving a fluid used for drying the laundry. Along the movement line the drying machine comprises:
- a drum which may rotate and which is designed to accommodate the laundry to be dried;
- an electrical heating element which enables the fluid for drying the laundry to be heated;
- a blower which moves the fluid long the movement line;
- a condenser which, along the direction of flow of the fluid, is interposed between the drum and the electrical heating element;
- a humidity sensor which measures the level of humidity of the laundry and of the fluid for drying the laundry.

The drying cycle in these drying machines is terminated when the level of humidity measured by the humidity sensor falls below a pre-stored threshold. This means that the laundry placed in the drum is almost dry. The above-mentioned drying machines are not free from drawbacks. More specifically, a smaller quantity of water is extracted in the unit of time towards the end of the drying cycle with the same energy consumption. Moreover, with the reduction in the extraction of water there is a greater heating of the laundry and this could damage the laundry in the long term (especially in the case of delicate garments).

It is also known the drying machine disclosed in US 2007/068036.

In this context, the technical purpose which forms the basis of this invention is to propose a method for drying laundry using a drying machine that overcomes the above mentioned drawbacks of the prior art.

More specifically, the aim of this invention is to provide a method which is able to optimise the energy consumption without the need to use a sophisticated and costly system. A further aim of the invention is to reduce the risk of damaging the laundry by subjecting it to excessive temperatures. The technical purpose indicated and the aims specified are substantially achieved by a method comprising the technical features described in one or more of the appended claims.

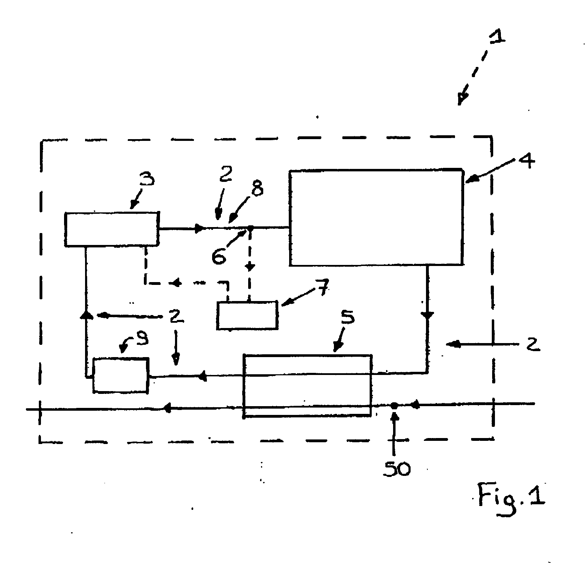

Further features and advantages of this invention are more apparent in the non-limiting description which follows of a preferred non-limiting embodiment of a drying machine (of the type schematically indicated in Figure 1) implementing the method according to this invention. This invention relates to a method for drying laundry in a drying machine. With reference to the accompanying drawing, the numeral 1 denotes a drying machine according to this invention. Drying machine 1 means both an electrical household appliance which can solely dry the laundry and an electrical household appliance which can firstly wash the laundry and then dry it keeping it always within the same compartment (this electrical household appliance is typically known as a washer-dryer). Conveniently, the drying machine comprises a line 2 for moving a drying fluid. Preferably, the drying fluid is air. In the preferred embodiment the movement line 2 is a closed circuit. Conveniently, the drying machine 1 comprises a rotatable drum 4 designed to accommodate the laundry to be dried. Conveniently, the drum 4 is housed in a drying compartment of the drying machine 1. Advantageously, the drying machine 1 comprises means 3 for heating the drying fluid (the drying fluid being appropriately designed to enter the drum 4 for drying the laundry). The drum 4 and the heating means 3 are located along the line 2 for moving the drying fluid.

The method comprises the step of moving the drying fluid along the movement line 2. In this regard, the drying machine 1 advantageously comprises a blower 9 located along the movement line 2. Conveniently, the method comprises a first step of drying the laundry in the drum 4 for a duration equal to a predetermined value. For the entire duration of the first drying step the heating means 3 are controlled to take the fluid, in a predetermined zone of the movement line 2, to a target temperature equal to a predetermined value.

The method also comprises a second step of drying the laundry in the drum 4 for a duration equal to a predetermined value. For the entire duration of the second drying step the heating means 3 are controlled to take the fluid, in a predetermined zone 8 of the movement line 2, to a target temperature equal to a predetermined value. The second drying step is after the first drying step. The predetermined value of the target temperature in the second drying step is less than the predetermined value of the target temperature in the first drying step.

Due to the fact that towards the end of the drying cycle (especially below 10% of residual humidity in the water) the ratio between the water extracted from the laundry and the energy consumed reduces, an attempt has been made to reduce the energy consumption during that step. Moreover, by reducing the quantity of heat used for evaporation of the laundry, the temperature reduction also allows the temperature of the laundry to be reduced (thereby avoiding damage to the laundry, especially in the case of delicate garments).

Conveniently, the second drying step is immediately after the first drying step.

The method also comprises a third step of drying the laundry in the drum 4 for a duration equal to a predetermined value. For the entire duration of the third drying step the heating means are controlled to take the fluid, in a predetermined zone of the movement line 2, to a target temperature equal to a predetermined value. The third drying step is after the second drying step, the predetermined value of the target temperature in the third drying step is less than the predetermined value of the target temperature in the second drying step.

The heating means 3 to take/maintain the fluid at the target temperature may allow oscillations of the fluid temperature in the predetermined zone around the value predetermined during the first, second and third drying phases. Conveniently, the predetermined value of the target temperature in the first drying step is between 130°C and 136°C, and in the second drying step it is between 115° and 110°C.

In the preferred embodiment the predetermined value of the target temperature in the first drying step is between 130°C and 136°C, between 115°C and 126°C in the second drying step, and between 110°C and 115°C in the third drying step.

The predetermined zone of the movement line 2 is located at the heating means 3. As illustrated by way of a non-limiting example the drying machine 1 comprises a condenser 5 located along the movement line 2; relative to a direction of flow of the fluid along the movement line 2, the heating means 3 are downstream of the condenser 5 and upstream of the drum 4 following a direction of flow of the fluid along the movement line 2. Conveniently, the blower 9 is also downstream of the condenser 5 and upstream of the drum 4 following a direction of flow of the fluid along the movement line 2. Advantageously, the heating means 3 are located at the inlet of the blower 9. Conveniently, the energy consumption of the blower 9 during the second and/or the third drying step is less than that in the first drying step. More specifically, the blower 9 is of the centrifugal type and the speed of rotation of the blower 9 during at least a part of the second and/or third drying step is less than in the first drying step.

The first drying step (and/or the second drying step, and/or the third drying step) provides of:
- measuring with a temperature sensor 6 the temperature value in the predetermined zone 8;
- controlling, according to the information provided by the information sensor 6, the heating means 3 for taking the fluid in the predetermined zone 8 to the corresponding target temperature (during the first drying step the target temperature will be that of the first drying step; during the second drying step the target temperature will be that of the second drying step; during the third drying step the target temperature will be that of the third drying step). For example, depending on the temperature measured by the sensor 6 the quantity of heat generated by the heating means 3 may be regulated, for example using prior art control techniques to vary the duty-cycle for switching on the heating means 3.

Conveniently, the temperature sensor 6 is located at the heating means 3. More specifically, the temperature sensor 6 is located downstream of the heating means 3 and upstream of the drum 4 following the direction of flow of the fluid along the movement line 2.

The method also comprises a step for selecting the predetermined values of duration and target temperature of the first and second drying steps (and conveniently, if it is present, also of the third drying step).

In one particular embodiment, the selecting step is performed by an electronic control unit 7 of the dryer 1 as a function of the weight of the laundry placed in the drum 4. Conveniently, the selecting step is performed before or during (typically, at the start of) the first drying step.

In an alternative embodiment, the selecting step performed by an electronic control unit 7 of the dryer 1 is performed as a function of a parameter set manually by a user through a selector switch. In that case, the parameter is set by a user based on his/her sensitivity according to the quantity of laundry to be dried; for example, he/she could set the total time of duration of the drying cycle or more simply he/she could set an option depending on the load placed in the drum 4 (for example, full load/half load, etc.). In the preferred embodiment the drum 4, at least for a first predetermined interval, is rotated at a speed of between 90 and 110 revs/min, preferably approximately 100 revs/min to obtain a satellization of the laundry to be dried in the drum 4. In this way a more homogeneous final humidity of the laundry in the drum is obtained (especially between the laundry located near an opening door and the laundry located near a bottom wall of the drum 4). Advantageously, the first predetermined interval occurs during the second and/or the first drying step. Preferably, the drum 4, at least for a second predetermined interval, is rotated at a speed of between 55 and 75 revs/min, preferably approximately 65 revs/min to remix the laundry inside the drum. The second predetermined interval is after the first predetermined interval. Preferably, the duration of the first drying step is between 50% and 65% of the duration of the sum of the first, second and third drying step.

Preferably, the duration of the second drying step is between 15% and 25% of the duration of the sum of the first, second and third drying step. Preferably, the duration of the third drying step is between 15% and 25% of the duration of the sum of the first, second and third drying step. Conveniently, the duration of the second drying step is between 25% and 50% of the duration of the first drying step.

The Applicant has found that by reducing the temperature in the final step of the cycle and increasing slightly the duration of the cycle it is possible to obtain a reduction in energy consumption without penalising the degree of drying of the laundry.

During the second drying step the method also provides the step of reducing, compared to the first drying step, the open time of an electric valve 50 for feeding a cooling fluid into the condenser 5.

When the electric valve 50 is open, it allows the introduction of water (typically mains water) into the condenser 5.

The greater the opening of the electric valve 50 the greater will be the introduction of cooling water into the condenser 5.

Typically, the cooling fluid is water. Typically, the ratio between the open time in the second and the first drying step is between 0.6 and 0.9.

More specifically, during the third drying step the method provides the step of reducing, compared to the second drying step, the open time of the electric valve 50 for feeding a cooling fluid into the condenser 5. The ratio between the open time in the third and the second drying step is between 0.7 and 0.9.

In the preferred embodiment the electric valve 50 remains open for approximately 7 seconds per minute during the first drying step, approximately 5 seconds per minute during the second drying step, approximately 4 seconds per minute during the third drying step. The reduction in the quantity of cooling fluid fed into the condenser 5 causes a reduction in the condensation capacity. However, this makes it possible to prevent an excessive reduction in the temperature during the second and/or the third drying step and at the same time allows a reduction in the use of cooling fluid (thereby minimising waste). The reduction in the quantity of cooling fluid fed into the condenser 5 during the second and/or third drying step has a synergic effect with the reduction of the temperature of the cooling fluid in the second and/or in the third drying step.

The invention described brings many advantages.

More specifically, it allows a reduction in the energy consumption and an optimisation of the drying cycle. Moreover, it minimises the risk of damaging the laundry by subjecting it to an excessive temperature.

It shall be understood that the invention described above may be modified and adapted in several ways without departing from the scope of the inventive concept. Moreover, all the details of the invention may be substituted by other technically equivalent elements. In practice, all the materials used, as well as the dimensions, may vary according to requirements.

## Claims

1. A method for drying laundry in a drying machine comprising: a drying fluid movement line (2), a rotatable drum (4) designed to receive the laundry to be dried, heating means (3) for heating the drying fluid, the fluid being designed to enter the drum (4); the drum (4) and the heating means (3) being located along the drying fluid movement line (2);
the method comprising the steps of:
- moving the drying fluid along the movement line (2);
- performing a first step of drying the laundry in the drum (4); the heating means (3) being controlled for the entire duration of the first drying step in order to take the fluid, in a predetermined zone of the movement line (2), to a target temperature equal to a predetermined value;
- performing a second step of drying the laundry in the drum (4); the heating means being controlled for the entire duration of the second drying step in order to take the fluid, in the predetermined zone of the movement line (2), to a target temperature equal to a predetermined value; the second drying step following the first drying step and the predetermined value of the target temperature in the second drying step being lower than the predetermined value of the target temperature in the first drying step;
the method being **characterised in that**:
- the first step of drying has a duration equal to a predetermined value;
- the second step of diving has a duration equal to a predetermined value.

2. The method according to claim 1, **characterized in that** the second drying step follows on immediately the first drying step.

3. The method according to claim 1 or 2, **characterized by** performing a third step of drying the laundry in the drum (4) for a duration equal to a predetermined value; the heating means (3) being controlled for the entire duration of the third drying step in order to take the fluid, in the predetermined zone of the movement line (2), to a target temperature equal to a predetermined value; the third drying step following the second drying step and the predetermined value of the target temperature in the third drying step being lower than the predetermined value of the target temperature in the second drying step.

4. The method according to claim 3, **characterized in that** the predetermined value of the target temperature in the first drying step is between 130°C and 136°C, between 115°C and 126°C in the second drying step, and between 110°C and 115°C in the third drying step.

5. The method according to claim 3 or 4, **characterized in that** the duration of the first drying step is between 50% and 65% of the sum of the durations of the first, second and third drying steps; the duration of the second drying step is between 15% and 25% of the sum of the durations of the first, second and third drying steps; and the duration of the third drying step is between 15% and 25% of the sum of the durations of the first, second and third drying steps.

6. The method according to any of the preceding claims, **characterized in that** the duration of the second drying step is between 25% and 50% of the duration of the first drying step.

7. The method according to any of the preceding claims, **characterized in that** the predetermined zone of the movement line (2) is located at the heating means (3).

8. The method according to any of the preceding claims, **characterized in that** the drying machine (1) comprises a condenser (5) located along the movement line (2); the heating means (3) being downstream of the condenser (5) and upstream of the drum (4) relative to a direction of fluid flow along the movement line (2).

9. The method according to claim 8, **characterized by** reducing, during the second drying step, compared to the first drying step, the open time of an electric valve (50) for feeding a cooling fluid into the condenser (5).

10. The method according to claim 8 or 9 when dependent directly or indirectly on claim 3, **characterized by** reducing during the third drying step, compared to the second drying step, the open time of an electric valve (50) for feeding a cooling fluid into the condenser (5); the ratio between the open time in the third and second drying steps being between 0.7 and 0.9, and the ratio between the open time in the second and first drying steps being between 0.6 and 0.9.

11. The method according to any of the preceding claims, **characterized in that** the first and second drying steps comprise:
- measuring with a temperature sensor (6) the value of the temperature in the predetermined zone (8);
- controlling the heating means (3) as a function of the information supplied by the temperature sensor (6) in order to take the fluid in the predetermined zone (8) to the corresponding target temperature.

12. The method according to any of the preceding claims, **characterized in that** it comprises a step of selecting the predetermined values of duration and target temperature of the first and second drying steps.

13. The method according to claim 12, **characterized in that** the selecting step is performed by an electronic control unit (7) of the dryer (1) as a function of the weight of the laundry placed in the drum (4).

14. The method according to claim 12, **characterized in that** the selecting step is performed by an electronic control unit (7) of the dryer (1) as a function of the total duration of the drying cycle set manually by a user through a selector switch.

15. The method according to any of the preceding claims, **characterized in that**, at least for a first interval, the drum (4) is rotated at a speed of between 90 and 110 rpm in order to obtain satellization of the laundry to be dried in the drum (4).

## Patentansprüche

1. Verfahren zum Wäschetrocknen in einer Trocknermaschine, umfassend: eine Trocknungsfluidbewegungsleitung (2), eine rotierbare Trommel (4), die zur Aufnahme der zu trocknenden Wäsche konzipiert ist, Erhitzungsmittel (3) zum Erhitzen des Trocknungsfluids, wobei das Fluid dazu konzipiert ist, in die Trommel (4) einzutreten; wobei die Trommel (4) und die Erhitzungsmittel (3) entlang der Trocknungsfluidbewegungsleitung (2) liegen;
wobei das Verfahren die folgenden Schritte umfasst:
- Bewegen des Trocknungsfluids entlang der Bewegungsleitung (2);
- Ausführen eines ersten Schritts des Trocknens der Wäsche in der Trommel (4), wobei die Erhitzungsmittel (3) für die gesamte Dauer des ersten Trocknungsschritts gesteuert werden, um das Fluid in einem festgelegten Bereich der Bewegungsleitung (2) auf eine Zieltemperatur zu bringen, die einem festgelegten Wert entspricht;
- Ausführen eines zweiten Schritts des Trocknens der Wäsche in der Trommel (4), wobei die Erhitzungsmittel für die gesamte Dauer des zweiten Trocknungsschritts gesteuert werden, um das Fluid in einem festgelegten Bereich der Bewegungsleitung (2) auf eine Zieltemperatur zu bringen, die einem festgelegten Wert entspricht; wobei der zweite Trocknungsschritt auf den ersten Trocknungsschritt folgt und der festgelegte Wert der Zieltemperatur im zweiten Trocknungsschritt niedriger als der festgelegte Wert der Zieltemperatur im ersten Trocknungsschritt ist;
wobei das Verfahren **dadurch gekennzeichnet ist, dass**:
- der erste Schritt des Trocknens eine Dauer aufweist, die einem festgelegten Wert entspricht;
- der zweite Schritt des Trocknens eine Dauer aufweist, die einem festgelegten Wert entspricht.

2. Verfahren nach Anspruch 1, **dadurch gekennzeichnet, dass** der zweite Trocknungsschritt unmittelbar auf den ersten Trocknungsschritt folgt.

3. Verfahren nach Anspruch 1 oder 2, **gekennzeichnet durch** das Ausführen eines dritten Schritts des Trocknens der Wäsche in der Trommel (4) für eine Dauer, die einem festgelegten Wert entspricht, wobei die Erhitzungsmittel (3) für die gesamte Dauer des dritten Trocknungsschritts gesteuert werden, um das Fluid im festgelegten Bereich der Bewegungsleitung (2) auf eine Zieltemperatur zu bringen, die einem festgelegten Wert entspricht; wobei der dritte Trocknungsschritt auf den zweiten Trocknungsschritt folgt und der festgelegte Wert der Zieltemperatur im dritten Trocknungsschritt niedriger als der festgelegte Wert der Zieltemperatur im zweiten Trocknungsschritt ist.

4. Verfahren nach Anspruch 3, **dadurch gekennzeichnet, dass** der festgelegte Wert der Zieltemperatur im ersten Trocknungsschritt zwischen 130 °C und 136 °C, im zweiten Trocknungsschritt zwischen 115 °C und 126 °C und im dritten Trocknungsschritt zwischen 110 °C und 115 °C liegt.

5. Verfahren nach Anspruch 3 oder 4, **dadurch gekennzeichnet, dass** die Dauer des ersten Trocknungsschritts zwischen 50 % und 65 % der Summe der Dauern des ersten, zweiten und dritten Trocknungsschritts beträgt, die Dauer des zweiten Trocknungsschritts zwischen 15 % und 25 % der Summe der Dauern des ersten, zweiten und dritten Trocknungsschritts beträgt und die Dauer des dritten Trocknungsschritts zwischen 15 % und 25 % der Summe der Dauern des ersten, zweiten und dritten Trocknungsschritts beträgt.

6. Verfahren nach einem der vorangehenden Ansprüche, **dadurch gekennzeichnet, dass** die Dauer des zweiten Trocknungsschritts zwischen 25 % und 50 % der Dauer des ersten Trocknungsschritts beträgt.

7. Verfahren nach einem der vorangehenden Ansprüche, **dadurch gekennzeichnet, dass** der festgelegte Bereich der Bewegungsleitung (2) an den Erhitzungsmitteln (3) liegt.

8. Verfahren nach einem der vorangehenden Ansprüche, **dadurch gekennzeichnet, dass** die Trocknungsmaschine (1) einen Kondensator (5) umfasst, der entlang der Bewegungsleitung (2) liegt; wobei die Erhitzungsmittel (3) relativ zu einer Richtung des Fluidflusses entlang der Bewegungsleitung (2) dem Kondensator (5) nachgelagert und der Trommel (4) vorgelagert liegen.

9. Verfahren nach Anspruch 8, **gekennzeichnet durch** das Verringern, während des zweiten Trocknungsschritts, verglichen mit dem ersten Trocknungsschritt, der Öffnungszeit eines elektrischen Ventils (50) zum Zuführen eines Kühlfluids in den Kondensator (5).

10. Verfahren nach Anspruch 8 oder 9, wenn direkt oder indirekt abhängig von Anspruch 3, **gekennzeichnet durch** das Verringern, während des dritten Trocknungsschritts, verglichen mit dem zweiten Trocknungsschritt, der Öffnungszeit eines elektrischen Ventils (50) zum Zuführen eines Kühlfluids in den Kondensator (5); wobei das Verhältnis zwischen der Öffnungszeit im dritten und zweiten Trocknungsschritt zwischen 0,7 und 0,9 beträgt, und das Verhältnis zwischen der Öffnungszeit im zweiten und ersten Trocknungsschritt zwischen 0,6 und 0,9 beträgt.

11. Verfahren nach einem der vorangehenden Ansprüche, **dadurch gekennzeichnet, dass** der erste und zweite Trocknungsschritt Folgendes umfassen:
- Messen des Wertes der Temperatur im festgelegten Bereich (8) mit einem Temperatursensor (6);
- Steuern der Erhitzungsmittel (3) in Abhängigkeit von den vom Temperatursensor (6) bereitgestellten Informationen, um das Fluid im festgelegten Bereich (8) auf die entsprechende Zieltemperatur zu bringen.

12. Verfahren nach einem der vorangehenden Ansprüche, **dadurch gekennzeichnet, dass** es einen Schritt des Auswählens der festgelegten Werte der Dauer und Zieltemperatur des ersten und zweiten Trocknungsschritts umfasst.

13. Verfahren nach Anspruch 12, **dadurch gekennzeichnet, dass** der Auswählschritt von einer elektronischen Steuereinheit (7) des Trockners (1) in Abhängigkeit vom Gewicht der in der Trommel (4) platzierten Wäsche ausgeführt wird.

14. Verfahren nach Anspruch 12, **dadurch gekennzeichnet, dass** der Auswählschritt von einer elektronischen Steuereinheit (7) des Trockners (1) in Abhängigkeit von der Gesamtdauer des Trocknungszyklus ausgeführt wird, der manuell von einem Bediener über einen Auswahlschalter eingestellt wird.

15. Verfahren nach einem der vorangehenden Ansprüche, **dadurch gekennzeichnet, dass**, zumindest für ein erstes Intervall, die Trommel (4) bei einer Geschwindigkeit zwischen 90 und 110 U/min in Rotation versetzt wird, um eine Satellisierung der in der Trommel (4) zu trocknenden Wäsche zu erhalten.

## Revendications

1. Procédé pour sécher le linge dans une machine à sécher comprenant : une ligne de déplacement de fluide de séchage (2), un tambour rotatif (4) conçu pour recevoir le linge à sécher, des moyens de chauffage (3) servant à chauffer le fluide de séchage, le fluide étant conçu pour entrer dans le tambour (4) ; le tambour (4) et les moyens de chauffage (3) étant situés le long de la ligne de déplacement de fluide de séchage (2) ;
le procédé comprenant les étapes de :
- déplacer le fluide de séchage le long de la ligne de déplacement (2) ;
- effectuer une première étape de séchage du linge dans le tambour (4) ; les moyens de chauffage (3) étant commandés pendant toute la durée de la première étape de séchage afin d'amener le fluide, dans une zone prédéterminée de la ligne de déplacement (2), à une température cible équivalente à une valeur prédéterminée ;
- effectuer une seconde étape de séchage du linge dans le tambour (4) ; les moyens de chauffage étant commandés pendant toute la durée de la seconde étape de séchage afin d'amener le fluide, dans une zone prédéterminée de la ligne de déplacement (2), à une température cible équivalente à une valeur prédéterminée ; la seconde étape de séchage ayant lieu après la première étape de séchage et la valeur prédéterminée de la température cible dans la seconde étape de séchage étant inférieure à la valeur prédéterminée de la température cible dans la première étape de séchage ;
le procédé étant **caractérisé en ce que** :
- la première étape de séchage a une durée égale à une valeur prédéterminée ;
- la seconde étape de séchage a une durée égale à une valeur prédéterminée.

2. Procédé selon la revendication 1, **caractérisé en ce que** la seconde étape de séchage a lieu immédiatement après la première étape de séchage.

3. Procédé selon les revendications 1 ou 2, **caractérisé par** la réalisation d'une troisième étape de séchage du linge dans le tambour (4) pendant une durée égale à une valeur prédéterminée ; les moyens de chauffage (3) étant commandés pendant toute la durée de la troisième étape de chauffage afin d'amener le fluide, dans la zone prédéterminée de la ligne de déplacement (2), à une température cible égale à une valeur prédéterminée ; la troisième étape de séchage ayant lieu après la seconde étape de séchage et la valeur prédéterminée de la température cible dans la troisième étape de séchage étant inférieure à la valeur prédéterminée de la température cible dans la seconde étape de séchage.

4. Procédé selon la revendication 3, **caractérisé en ce que** la valeur prédéterminée de la température cible dans la première étape de séchage est comprise entre 130 et 136°C, entre 115 et 126°C dans la seconde étape de séchage et entre 110 et 115°C dans la troisième étape de séchage.

5. Procédé selon les revendications 3 ou 4, **caractérisé en ce que** la durée de la première étape de séchage est comprise entre 50 et 65 % de la somme des durées des première, seconde et troisième étapes de séchage, la durée de la seconde étape de séchage est comprise entre 15 et 25 % de la somme des durées des première, seconde et troisième étapes de séchage et la durée de la troisième étape de séchage est comprise entre 15 et 25 % de la somme des durées des première, seconde et troisième étapes de séchage.

6. Procédé selon l'une quelconque des revendications précédentes, **caractérisé en ce que** la durée de la seconde étape de séchage est comprise entre 25 et 50 % de la durée de la première étape de séchage.

7. Procédé selon l'une quelconque des revendications précédentes, **caractérisé en ce que** la zone prédéterminée de la ligne de déplacement (2) est située au niveau des moyens de chauffage (3).

8. Procédé selon l'une quelconque des revendications précédentes, **caractérisé en ce que** la machine à sécher (1) comprend un condensateur (5) situé le long de la ligne de déplacement (2) ; les moyens de chauffage (3) étant situés en aval du condensateur (5) et en amont du tambour (4) par rapport au sens d'écoulement du fluide le long de la ligne de déplacement (2).

9. Procédé selon la revendication 8, **caractérisé par** la réduction, lors de la seconde étape de séchage comparée à la première étape de séchage, du temps d'ouverture d'une électrovanne (50) servant à alimenter un liquide de refroidissement dans le condensateur (5).

10. Procédé selon les revendications 8 ou 9, lorsqu'elles dépendent directement ou indirectement de la revendication 3, **caractérisé par** la réduction, lors de la troisième étape de séchage comparée à la seconde étape de séchage, du temps d'ouverture d'une électrovanne (50) servant à alimenter un liquide de refroidissement dans le condensateur (5) ; le rapport entre le temps d'ouverture dans les troisième et seconde étapes de séchage étant compris entre 0,7 et 0,9 et le rapport entre le temps d'ouverture dans les seconde et première étapes de séchage étant compris entre 0,6 et 0,9.

11. Procédé selon l'une quelconque des revendications précédentes, **caractérisé en ce que** les première et seconde étapes de séchage comprennent :
- la mesure avec un détecteur de température (6) de la valeur de la température dans la zone prédéterminée (8) ;
- la commande des moyens de chauffage (3) en fonction des informations fournies par le détecteur de température (6) afin d'amener le fluide dans la zone prédéterminée (8) à la température cible correspondante.

12. Procédé selon l'une quelconque des revendications précédentes, **caractérisé en ce qu'**il comprend une étape de sélection de valeurs prédéterminées de durée et de température cible des première et seconde étapes de séchage.

13. Procédé selon la revendication 12, **caractérisé en ce que** l'étape de sélection est réalisée par une unité de commande électronique (7) du séchoir (1) en fonction du poids du linge placé dans le tambour (4).

14. Procédé selon la revendication 12, **caractérisé en ce que** l'étape de sélection est réalisée par une unité de commande électronique (7) du séchoir (1) en fonction de la durée totale du cycle de séchage fixé manuellement par un utilisateur par le biais d'un commutateur de sélection.

15. Procédé selon l'une quelconque des revendications précédentes, **caractérisé en ce qu'**au moins pendant un premier intervalle, le tambour (4) tourne à une vitesse comprise entre 90 et 110 t/mn afin d'obtenir la satellisation du linge à sécher dans le tambour (4).
